# EUROPEAN PATENT SPECIFICATION

(11) **EP 1 703 785 B1**
(45) Date of publication and mention of the grant of the patent: **10.09.2008**
(21) Application number: 05702202.2
(22) Date of filing: 11.01.2005
(51) Int. Cl.: A01D 46/00

(54) **AN APPARATUS AND A PROCESS FOR GATHERING AGRICULTURAL PRODUCE FROM A FIELD**
VORRICHTUNG UND VERFAHREN ZUM AUFSAMMELN VON LANDWIRTSCHAFTLICHEN ERZEUGNISSEN VON EINEM FELD
APPAREIL ET PROCEDE DE RECOLTE D'UN PRODUIT DE L'AGRICULTURE A PARTIR D'UN CHAMP

(30) Priority: 16.01.2004 IT MO20040010
(43) Date of publication of application: 27.09.2006
(73) Proprietor: Saetti, Luciano, 41019 Soliera (IT)
(72) Inventor: Saetti, Luciano, 41019 Soliera (IT)
(74) Representative: Gotra, Stefano
(86) International application number: PCT/IB2005/000031
(87) International publication number: WO 2005/077145

(56) References cited:
- US-A- 3 955 343
- US-A- 4 759 680
- US-A- 5 042 240

## Description

### Technical Field

The invention relates to an apparatus and a process for gathering agricultural produce from a field.

### Background Art

It is usefully applied in the field of many types of food produce, for example grapes, which are harvested mostly manually using containers (baskets or crates) which are filled manually and the transferred using carts, or by mechanical means with the use of special carts on which the harvesters are perched, who however work by hand to detach the products from the plants and place them in containers arranged on the carts themselves.

With regard to the actual detachment stage of the produce from the plant, this mechanised way of harvesting, commonly used for gathering fruits cultivated in lines (pears etc.), and the placing thereof in containers is mostly done in the same way i.e. manually, in which the harvester is on the ground instead of being in the cart.

This harvesting process, however mechanised it may be, exhibits all of the negative characteristics of the manual methods, where the harvester removes the products from the plants and deposits them in the containers which normally are placed on the ground and only thereafter, when they are full, will be lifted and placed on the carts so that they can be transferred. The harvester therefore has to detach the fruit from the plants and transfer it manually into the containers. This operation requires a certain type of care on the part of the harvester, as well as considerable physical exertion due to the fact that the produce, after being detached from the plant, has to be held by the worker until it is finally deposited in the container.

Another type of mechanised harvesting, used for example with grapes produced in grids with pole supports, uses special harvesting machines which are located on the single rows and, though there are various systems, all "rake" the vines and cause the grapes to detach.

This type of harvesting, which can with some justification be called mechanical, is however very traumatic for the vine and the grapes harvested.

Thus this process does not enable a cleanly and well-produced harvest, such as the traditional manual methods provide.

Another way to mechanise the harvesting operation is suggested in document US 3995343. The document discloses a fruit harvesting machine comprising means for recuperating an elongated continuous flexible belt while advancing between two successive rows of plants. The belt is previously laid on the ground between the rows of plants whose fruit is to be harvested.

Document US 4759680 discloses an apparatus for separating a crop from a continuous tray. The apparatus includes a first conveyor which engages and transports a continuous tray which has disposed thereon a crop to be harvested into contact with a second conveyor. The second conveyor engages and inverts the continuous tray to dislodge the crop disposed thereon.

A drawback of the harvesting methods suggested by the documents above is that they do require the use of self-propelled vehicles or agricultural vehicles for collection between the rows of plants and trees. Consequently, sufficient width between the rows for vehicle manoeuvring is required.

The main aim of the present invention is to obviate the above-cited limitations and drawbacks in the prior art.

Some advantages of the invention are its simplicity and the ease with which it can be used.

A further advantage of the invention is that it considerably simplifies the operations for the personnel at work, and reduces the physical effort needed with respect to the traditional art.

These aims and advantages and others besides are all attained by the present invention, as it is characterized in the claims that follow.

### Disclosure of Invention

Further characteristics and advantages of the present invention will better emerge from the detailed description that follows of some preferred but non-exclusive embodiment of the invention, illustrated purely by way of non-limiting examples in the accompanying figures of the drawings, in which:
figure 1 is a schematic perspective view of the invention;
figure 2 shows, in the same view as in figure 1, a further embodiment;
figure 3 shows, in the same view as in figure 1, a further embodiment;
figure 4 shows, in the same view as in figure 1, a further embodiment.

The figures of the drawings show an apparatus for harvesting agricultural produce in the field, in particular grapes 3, which comprises at least one belt 4 which can be rested on the ground 1 close to the vines 2, which are in the embodiment cultivated on poles. The fruit harvested could be other than grapes, and the plants other than vines.

The single belt 4 is laid on the ground so that the grapes 3 can fall onto it once they have fallen from the vine 2. The belt 4 is therefore of an appropriate width and is made of a suitable material.

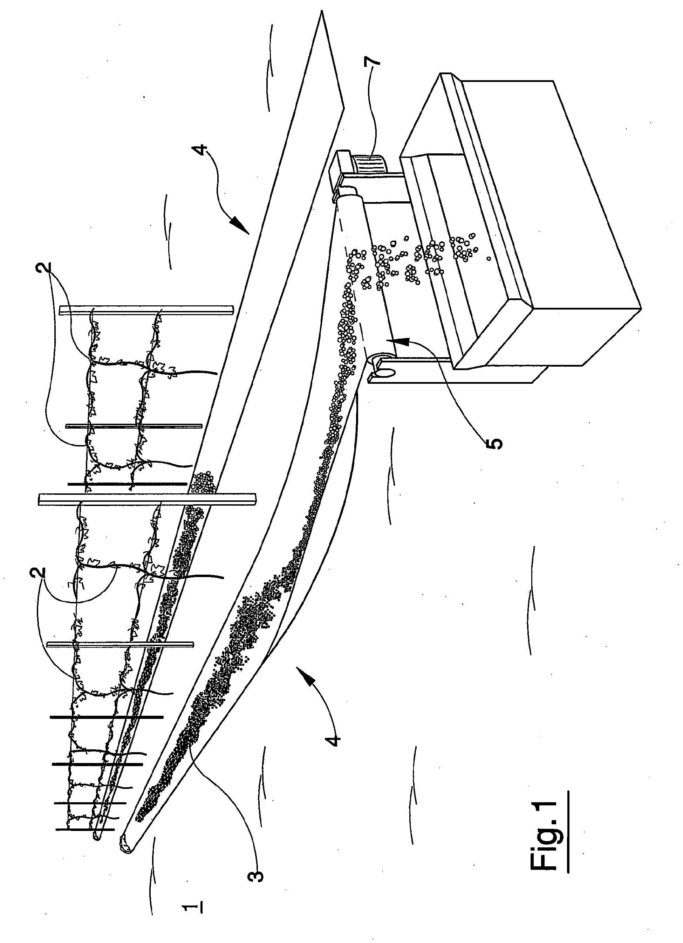

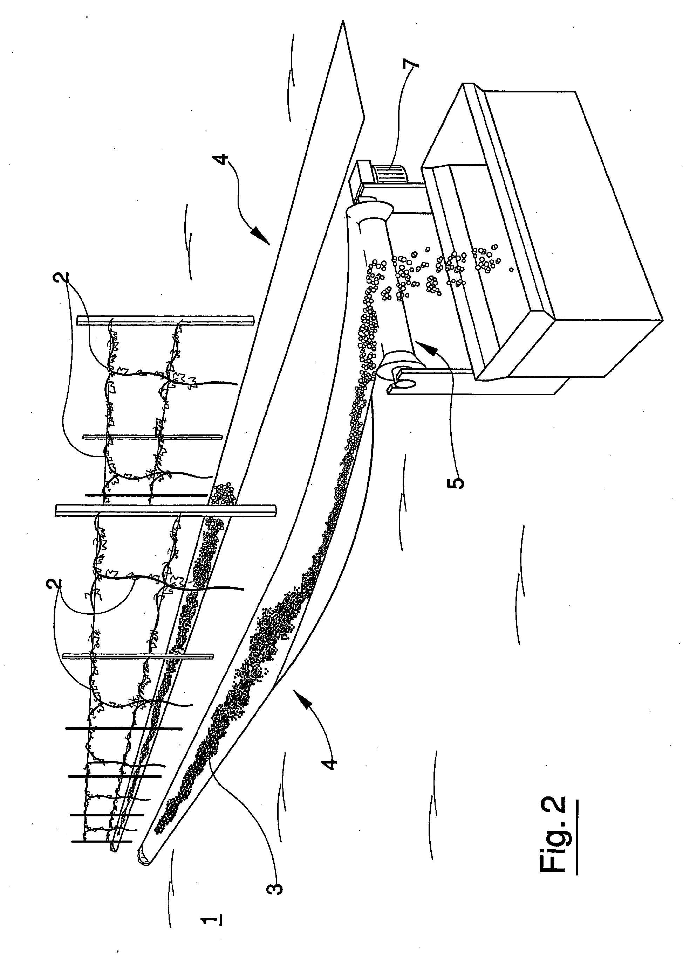

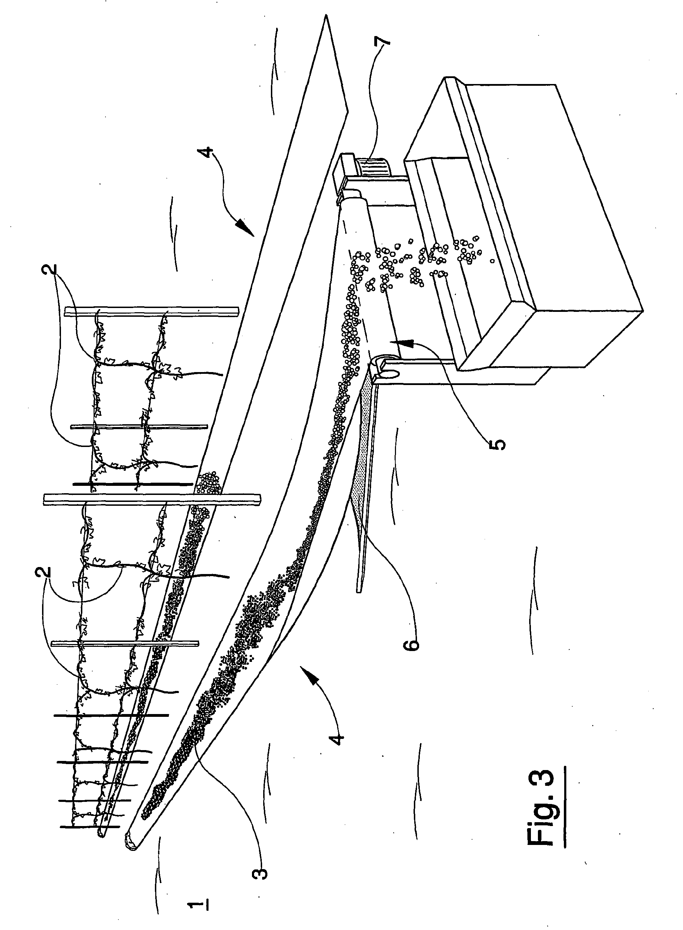

In particular, in the illustrated embodiments of figures 1, 2 and 3, the belt 4 is flexible and elastically deformable, both longitudinally and transversally, and is sufficiently resistant to enable it to be dragged on the ground once loaded with the grapes 3.

The loading operation of the belt 4 is done very simply, very rapidly and with a minimum exertion on the part of the harvesters, who only have to detach the bunches of grapes from the vines and drop them onto the belt 4.

Once the belt has been loaded in the described way, the belt 4 can be activated and longitudinally dragged, therefore transporting the whole load thereon of produce, in this case grapes 3, to be unloaded at destination.

Means for dragging the belt 4 comprise, in the simplest preferred embodiment, at least a cylinder 5 (a roller or a drum) which is rotated either mechanically or manually so that the belt 4 is wound around it.

The cylinder 5 is preferably rotated about an axis thereof by a specially-predisposed simple gear reducer 7.

The cylinder 5 can be mounted on a tractor or other agricultural machine having an independent motorisation, or can be operated via a power take-off from the tractor or machine.

The cylinder 5 is preferably disposed with a horizontal rotation axis, or nearly horizontal.

In particular, the cylinder 5 is located at a predetermined height above the ground 1. This is so that the place where the grapes 3 are unloaded is located below or immediately downstream, in the advancement direction of the belt 4, of the portion of the belt 4 which is partially wound around the cylinder 5.

The fact that the cylinder 5 on which the belt 4 is slowly wound, which belt 4 is flexible and elastically deformable, is located at a certain height above the ground is of great importance.

The raising of the belt 4 ensures, at least in the tract of belt 4 which is raised from the ground, i.e. the part immediately preceding the cylinder 5, effective protection against the fruit's falling off the belt 4, as the belt 4 laterally bends upwards due to the weight of the fruit, causing the fruit to be contained in the central part thereof. This is largely due to the mainly transversal elasticity of the belt.

Secondly, the raised position of the belt 4 with respect to cylinder 5 enables the fruit to be unloaded by simple force of gravity, in the same way as in usual conveyor belt configurations. Obviously the unloading is done above an underlying container, or onto another conveyor belt which then loads the produce, for example, onto the back of a vehicle.

The belt 4 loading operation is very simply done, and is very rapid and requires a small physical exertion on the part of the harvesters, who basically only have to detach the bunches of grapes from the vine and drop them onto the belt 4.

A support element 6 can be predisposed below a portion of the belt 4 which immediately precedes (and is therefore closest to) the cylinder 5, with a double aim: firstly it will serve to give the correct inclination to the portion of belt 4 raised from the ground 1 and secondly it can be used to tease the belt 4 into a concave conformation, for correctly containing the fruit produce loaded on the belt 4 as it is raised from the ground 1; for this purpose the support element 6 is specially shaped, in the form of a channel.

The upper surface of the support element 6, which has a ramp function, must be sufficiently smooth to allow free sliding of the belt 4 riding over it.

To favour and possibly to accentuate the taking-on of the correct described conformation by the belt 4 as it is raised off the ground 1, in the part immediately preceding the cylinder 5, the cylinder 5 itself might be given a non-constant transversal section, characterised by greater diameter at ends thereof with respect to a central part thereof.

For normal operation, a plurality of cylinders is provided, one for each belt 4, which can be interchangeably used in the apparatus for dragging the belt 4 and for the unloading of the produce from the belt.

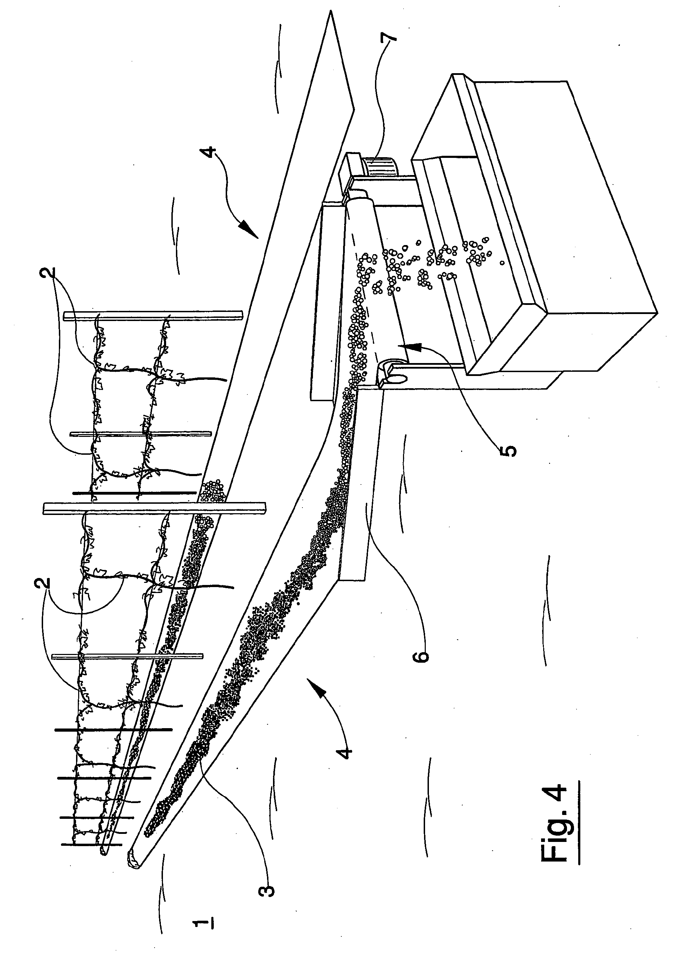

In a further embodiment, illustrated in figure 4, the belt 4, though having the flexibility in the longitudinal direction thereof, necessary for enabling winding thereof onto the cylinder 5, the belt 4 is not provided with much elastic deformability in a transversal direction thereof. In this case the lateral containing of the produce loaded on the belt 4 or on a part thereof closes to the cylinder 5 can be done by including two fixed lateral borders.

A further embodiment, not illustrated in the figures of the drawings, differs from the previously described embodiments in that it includes, on the belt 4 extended on the ground 1, provision of containers or trays which are deposited on the belt 4, which are superiorly open and which are destined to be filled with the agricultural produce picked off the plants or trees. In this embodiment the products are not directly deposited on the belt 4, but in the containers or trays which are placed on the belt 4; the trays effect a lateral containing of the fruits.

The belt 4 must be predisposed to afford, on a surface thereof, the containers or trays, i.e. the belt 4 must afford the necessary properties of adherence so that the trays can be drawn along on the belt 4.

Unloading can be done by tipping the container or trays or by simply removing and stacking them.

The present invention also concerns a process for gathering agricultural produce from the field, which includes, in order:
laying on the ground 1, in proximity of fruit plants from which fruit is to be harvested, at least a belt 4, which belt 4 is flexible and elastically deformable, which belt 4 is predisposed so that agricultural produce can be loaded thereon once detached from the plant or tree;
dragging the at least a belt 4 on which the produce is loaded up until the produce is unloaded in a predetermined destination; the dragging being performed by means comprising at least a cylinder 5 which is rotated so that the belt 4 is wound thereabout; the cylinder 5 being located at a predetermined height above the ground 1 and the destination for the unloading is located directly downstream of the portion of belt 4 which is wound about the cylinder 5, with reference to the advancement direction of the belt 4.

The dragging of the belt 4 by the cylinder 5 is done at a suitable speed, i.e. not a speed which might cause the produce on the belt to be moved around or lost.

The apparatus of the invention aims to enable the gathered produce to be transferred non-traumatically, that is, without any damage to the produce during the transport.

It also does not require the use of self-propelled vehicles or agricultural vehicles for collection between the rows of plants or trees, because the only operation needed is the laying of the belt 4 on the ground 1. This considerably reduces the risk of accidents for the workers.

The use of the invention, which is especially convenient in hilly areas, considerably reduces physical exertion on the part of the harvesters and, overall, reduces the manual labour required, by about 20-30%.

A considerably advantage offered by the invention, in particular relating to the harvesting of grapes, is that the harvesting of the produce on the "right" day in terms of temperature, so that the grapes can be crushed just when best results are obtainable, with no need to refrigerate the produce for any length of time.

## Claims

1. An apparatus for gathering agricultural produce from a field, comprising at least a belt (4) which is laid on the ground, in proximity of a fruit-bearing plant or tree ready for harvesting, which belt (4) receives the fruit when placed thereon, the fruit having been detached from the tree and deposited on the belt (4); **characterised in that it comprises** means for dragging the belt (4) on which means for dragging the fruit is borne in order to be unloaded therefrom at a predetermined destination; **the belt (4) being sufficiently resistant to enable** it **to be dragged on the ground once loaded with the fruit.**

2. The apparatus of claim 1, wherein the means comprise at least a cylinder (5) which is rotated in order to wind the belt (4) around the cylinder (5) starting from one end of the belt (4).

3. The apparatus of claim 2, wherein the at least a cylinder (5) is located at a predetermined height above the ground (1); the predetermined destination at which the fruit (3) is unloaded being immediately downstream of a part of the belt (4) which is partially wound around the at least a cylinder (5).

4. The apparatus of claim 3, wherein the at least a cylinder (5) is arranged with a horizontal or nearly horizontal rotation axis.

5. The apparatus of claim 3 or 4, wherein the at least a cylinder (5) has a transversal section which is constant.

6. The apparatus of claim 3 or 4, wherein the at least a cylinder (5) has a non-constant transversal section; the transversal section thereof being greater at at least one of two ends of the cylinder (5).

7. The apparatus of claim 3 or 4, wherein the at least a belt (4) is flexible and elastically deformable.

8. The apparatus of claim 3 or 4, wherein it comprises two fixed lateral borders predisposed at least at a part of the belt (4) which is closest to the cylinder (5), which borders function as lateral containers of the fruit loaded on the belt (4).

9. The apparatus of claim 7 or 8, wherein it comprises at least a support element (6) which is predisposed below the portion of belt (4) closest to the cylinder (5) and which functions as a ramp; the support element (6) having a double use: firstly it will serve to give the correct inclination to the portion of belt (4) raised from the ground (1) and secondly it can be used to tease the belt (4) into a concave conformation, for correctly containing the fruit produce loaded on the belt (4) as it is raised from the ground (1); the support element (6) being specially shaped for this purpose, in the form of a channel.

10. The apparatus of claim 1 or 2 or 3, wherein it comprises a plurality of containers, superiorly open, which containers are locatable on the belt (4) when laid out on the ground (1); the plurality containers being liable to be filled with the fruit which is detached from the plants and deposited therein; the belt (4) being predisposed so that on an upper surface thereof the plurality of containers can be placed, the upper surface having adherent properties so that the containers can be dragged together with the belt (4).

11. A process for gathering agricultural produce from a field, **characterised in that it comprises** stages of:
laying on the ground (1), in proximity of fruit plants from which fruit is to be harvested, at least a belt (4), which belt (4) is flexible and elastically deformable, which belt (4) is predisposed so that agricultural produce can be loaded thereon once detached from the plant or tree;
dragging the at least a belt (4) on which the produce is loaded up until the produce is unloaded at a predetermined destination; said belt (4) being sufficiently resistant to enable it to be dragged on the ground once loaded with the fruit; the dragging being performed by means comprising at least a cylinder (5) which is rotated so that the belt (4) is wound thereabout, starting from an end thereof;
the cylinder (5) being located at a predetermined height above the ground (1) and the destination for the unloading being located directly downstream of the portion of belt (4) which is wound about the cylinder (5), with reference to the advancement direction of the belt (4).

## Patentansprüche

1. Vorrichtung zum Aufsammeln von landwirtschaftlichen Erzeugnissen von einem Feld, enthaltend wenigstens ein Band (4), welches auf dem Boden liegt, und zwar dicht an einem Obststrauch oder -baum, der bereit ist, abgeerntet zu werden, welches Band (4) das abgelegte Obst aufnimmt, wobei das Obst von dem Baum gepflückt und auf dem Band (4) abgelegt wird; **dadurch gekennzeichnet, dass** sie Mittel zum Ziehen des Bandes (4) enthält, auf welchem das Obst getragen ist, um von diesem an einer bestimmten Stelle abgeladen werden zu können; wobei das Band (4) ausreichend widerstandsfähig ist, um auf dem Boden gezogen werden zu können, sobald es mit Obst beladen ist.

2. Vorrichtung nach Patentanspruch 1, bei welcher die Mittel wenigstens einen Zylinder (5) enthalten, welcher gedreht wird, um das Band (4) um den Zylinder (5) zu wickeln, ausgehend von einem Ende des Bandes (4).

3. Vorrichtung nach Patentanspruch 2, bei welcher der wenigstens eine Zylinder (5) auf einer vorgegebenen Höhe über dem Boden (1) angeordnet ist; wobei die bestimmte Stelle, an welcher das Obst (3) abgeladen wird, sich unmittelbar stromabwärts von einem Teil des Bandes (4) befindet, welcher teilweise um den wenigstens einen Zylinder (5) gewickelt ist.

4. Vorrichtung nach Patentanspruch 3, bei welcher der wenigstens eine Zylinder (5) mit einer horizontalen oder fast horizontalen Drehachse angeordnet ist.

5. Vorrichtung nach Patentanspruch 3 oder 4, bei welcher der wenigstens eine Zylinder (5) einen Querschnitt aufweist, der gleichbleibend ist.

6. Vorrichtung nach Patentanspruch 3 oder 4, bei welcher der wenigstens eine Zylinder (5) einen nicht gleichbleibenden Querschnitt aufweist; wobei der Querschnitt desselben an wenigstens einem der beiden Enden des Zylinders (5) grösser ist.

7. Vorrichtung nach Patentanspruch 3 oder 4, bei der wenigstens ein Band (4) flexibel und elastisch verformbar ist.

8. Vorrichtung nach Patentanspruch 3 oder 4, bei welcher diese wenigstens zwei seitliche feststehende Ränder enthält, vorgesehen an wenigstens einem Teil des Bandes (4), welcher sich am dichtesten an dem Zylinder (5) befindet, welche Ränder zum seitlichen Halten des auf dem Band (4) geladenen Obstes dienen.

9. Vorrichtung nach Patentanspruch 7 oder 8, bei welcher diese wenigstens ein Trägerelement (6) enthält, welches unter dem Abschnitt des Bandes (4) vorgesehen ist, der am dichtesten an dem Zylinder (5) liegt, und welcher als Rampe dient; wobei das Trägerelement (6) einen doppelten Verwendungszweck hat: erstens dient es dazu, dem Abschnitt des vom Boden (1) angehobenen Bandes (4) die korrekte Neigung zu verleihen, und zweitens kann es benutzt werden, um das Band (4) zur korrekten Aufnahme der auf dem Band (4) geladenen Obstprodukte in eine konkave Form zu bringen, wenn dieses vom Boden (1) angehoben ist; wobei das Trägerelement (6) zu diesem Zweck speziell in der Form eines Kanals ausgebildet ist.

10. Vorrichtung nach Patentanspruch 1 oder 2 oder 3, bei welcher diese eine Anzahl von oben offenen Behältern enthält, welche Behälter auf dem Band (4) angeordnet werden können, wenn dieses auf dem Boden (1) liegt; wobei die Behälter dieser Anzahl geeignet sind, mit dem Obst gefüllt zu werden, welches von den Bäumen gepflückt und darin abgelegt ist; wobei das Band (4) so vorgesehen ist, dass auf einer oberen Oberfläche desselben die Anzahl von Behältern angeordnet werden kann, und wobei die obere Oberfläche haftende Eigenschaften hat, so dass die Behälter zusammen mit dem Band (4) gezogen werden.

11. Verfahren zum Aufsammeln von landwirtschaftlichen Erzeugnissen von einem Feld, **dadurch gekennzeichnet, dass** es die folgenden Phasen enthält:
- Verlegen auf dem Boden (1) in der Nähe von Obstbäumen, von welchen das Obst geerntet werden soll, von wenigstens einem Band (4), welches Band (4) flexibel und elastisch verformbar ist, und welches Band (4) so vorgesehen ist, dass landwirtschaftliche Erzeugnisse auf diesem geladen werden können, sobald sie von dem Strauch oder dem Baum gepflückt sind;
- Ziehen des wenigstens einen Bandes (4), auf welchem das Produkt geladen ist, bis das Produkt an einer bestimmten Stelle abgeladen wird; wobei das genannte Band (4) ausreichend widerstandsfähig ist, um auf dem Boden gezogen zu werden, sobald es mit dem Obst beladen ist; wobei das Ziehen durch Mittel erfolgt, die wenigstens einen Zylinder (5) enthalten, welcher sich dreht, so dass das Band (4) um diesen gewickelt wird, ausgehend von einem Ende desselben;
- wobei der Zylinder (5) auf einer bestimmten Höhe über dem Boden (1) angeordnet ist und die zum Abladen bestimmte Stelle sich direkt stromabwärts von dem Abschnitt des Bandes (4) befindet, welcher um den Zylinder (5) gewickelt ist, unter Bezugnahme auf die Vorlaufrichtung des Bandes (4).

## Revendications

1. Appareil pour la récolte d'un produit de l'agriculture à partir d'un champ, comprenant au moins un tapis (4) étendu sur le sol, à proximité de plantes ou arbres portant des fruits prêts à la cueillette, lequel tapis (4) reçoit les fruits lorsqu'ils y sont placés, les fruits ayant été détachés de l'arbre et déposés sur le tapis (4); **caractérisé en ce qu'**il comprend des moyens d'entrainement du tapis (4) sur lesquels les fruits sont supportés de manière à être déchargés vers une destination prédéterminée; le tapis (4) étant suffisamment résistant pour qu'il puisse être trainé sur le sol une fois qu'il a été chargé avec les fruits.

2. Appareil selon la revendication 1, dans lequel les moyens comprennent au moins un cylindre (5) entrainé en rotation de manière à enrouler le tapis (4) autour du cylindre (5) en partant d'une extrémité du tapis (4).

3. Appareil selon la revendication 2, dans lequel l'au moins un cylindre (5) est situé à une hauteur prédéterminée au-dessus du sol (1); la destination prédéterminée dans laquelle les fruits (3) sont déchargés se trouvant immédiatement en aval d'une partie du tapis (4) qui est partiellement enroulée autour du au moins un cylindre (5).

4. Appareil selon la revendication 3, dans lequel l'au moins un cylindre (5) est disposé avec un axe de rotation horizontal ou presque horizontal.

5. Appareil selon la revendication 3 ou 4, dans lequel l'au moins un cylindre (5) présente une section transversale constante.

6. Appareil selon la revendication 3 ou 4, dans lequel l'au moins un cylindre (5) présente une section transversale non constante; sa section transversale étant supérieure en correspondance d'au moins l'une des deux extrémités du cylindre (5).

7. Appareil selon la revendication 3 ou 4, dans lequel l'au moins un tapis (4) est flexible et élastiquement déformable.

8. Appareil selon la revendication 3 ou 4, comprenant deux bords latéraux fixes prédisposés au moins en correspondance d'une partie du tapis (4) la plus proche du cylindre (5), lesquels bords fonctionnent en tant que conteneurs latéraux pour les fruits chargés sur le tapis (4).

9. Appareil selon la revendication 7 ou 8, comprenant au moins un élément de support (6) prédisposé sous la partie de tapis (4) la plus proche du cylindre (5) et fonctionnant comme une rampe; l'élément de support (6) ayant une double fonction: tout d'abord il sert à donner une correcte inclinaison à la partie de tapis (4) soulevée du sol (1), et en second lieu il peur être utilisé pour placer le tapis (4) dans une conformation concave, pour contenir correctement les fruits chargés sur le tapis (4) lorsqu'il est soulevé du sol (1); l'élément de support (6) étant spécialement formé dans ce but, sous la forme d'un canal.

10. Appareil selon la revendication 1, 2 ou 3, comprenant une pluralité de conteneurs, ouverts supérieurement, lesquels conteneurs pouvant être disposés sur le tapis (4) lorsqu'il est étendu sur le sol (1); la pluralité de conteneurs étant aptes à être remplis de fruits détachés des plantes et déposés en leur intérieur; le tapis (4) étant prédisposé de manière à ce que, sur sa surface supérieure, la pluralité de conteneurs puisse être placée, la surface supérieure ayant des propriétés adhérentes de manière à ce que les conteneurs puissent être trainés avec le tapis (4).

11. Procédé de récolte de produits de l'agriculture à partir d'un champ, **caractérisé en ce qu'**il comprend les phases de:
disposition sur le sol (1), à proximité des plantes portant des fruits devant être récoltés, d'au moins un tapis (4), lequel tapis (4) est flexible et
élastiquement déformable, lequel tapis (4) est prédisposé de manière à ce que les produits de l'agriculture puissent y être chargés une fois détachés de la plante ou de l'arbre;
entrainement de l'au moins un tapis (4) sur lequel le produit est chargé jusqu'à ce que le produit soit déchargé en correspondance d'une destination,
prédéterminée; ledit tapis (4) étant suffisamment résistant pour qu'il puisse être trainé sur le sol une fois qu'il a été chargé avec les fruits; l'entrainement étant réalisé par des moyens comprenant au moins un cylindre (5) qui est entrainé en rotation de manière à ce que le tapis (4) soit enroulé autour du cylindre (5), en partant de l'une de ses extrémités;
le cylindre (5) étant situé en correspondance d'une hauteur prédéterminée au-dessus du sol (1) et la destination pour le déchargement étant située directement en aval de la portion de tapis (4) enroulée autour du cylindre (5), en référence à la direction d'avancement du tapis (4).
